# EUROPEAN PATENT APPLICATION

(11) **EP 2 845 890 A1**
(43) Date of publication of application: **11.03.2015**
(21) Application number: 13884508.6
(22) Date of filing: 02.09.2013
(51) Int. Cl.: C09J 183/07, C09J 183/05, C09J 11/06, C09J 11/04

(54) **SINGLE-COMPONENT HIGH-REFRACTIVITY LED PACKAGING ADHESIVE AND PREPARATION METHOD THEREFOR**

(30) Priority: 14.05.2013 CN 201310176699
(71) Applicant: Niche-Tech Kaiser (Shantou) Limited, Shantou, Guangdong 515065 (CN)
(72) Inventor: CHOW, Chun-kay, Hong Kong 999077 (CN); CHOW, Bok-hin, Hong Kong 999077 (CN)
(74) Representative: Rutt, Jason Edward
(86) International application number: PCT/CN2013/001029
(87) International publication number: WO 2014/183236

(57) **Abstract**

The present invention provides a mono-component of high-refractive-index LED encapsulant which is made from the materials with following weight ratio: 50 to 80 portions of phenyl vinyl polysiloxane, 25 to 40 portions of cross-linking agent, 0.1 to 0.5 portions of platinum catalyst, 0.01 to 0.1 portions of inhibitor, and 0 to 5 portions of additive. It has some excellent properties of high refractive index, high transmittance, anti-radiation, high and low temperatures resistance and weatherability, the viscosity of the encapsulant is from 1000mPa.s to 7000mPa.s, with 60 days of storage life under room temperature, while 6 months of storage life under temperature from 0°C to 4°C, the hardness is from 80A to 70D, which is suited to high-power and high-luminous-efficiency LED encapsulation. The raw material is easy to get, and the preparation process is easy to be applied in industrial production because of its convenient operating and control method with mild condition and without pollution.

## Description

### FIELD OF THE INVENTION

The present invention relates to a light emitting diode (LED) encapsulating materials, in particular to a mono-component of high-refractive-index LED encapsulant and the method of preparation.

### BACKGROUND OF THE INVENTION

In the situation of serious global energy crisis, and increasingly stringent environmental requirements, LED lighting has been recognized as the third lighting revolution after fire and incandescent lighting in the history of mankind, due to its properties of long-service life, energy-saving, safety, environmental friendly, colorful and miniaturized.

Traditional epoxy resin encapsulating material cannot meet the requirements of high-quality LED encapsulating due to its disadvantages of moisture absorbing, aging, poor heat resistance, poor UV resistance and large curing internal stress. Silicone resin has gradually replaced epoxy resin and becomes the main material in LED encapsulating, with its excellent transparency, high and low temperature resistance, small curing internal stress.

Silicone resin LED encapsulating material is a cured product formed by hydrosilylation reaction between organosilicone materials, thus to protect internal chip and wire. Hydrosilylation reaction can occur slowly in the presence of platinum catalyst even under room temperature, therefore, it is required to store platinum catalysts and other materials separately, thus the silicone resin LED encapsulating material is mostly two-components in the market; the two-components need to be fully mixed and vacuum defoamed before encapsulation, which may affect producing efficiency. Existing mono-component silicone resin LED encapsulating material still has some disadvantages of having lower refractive index, shorter storage and floor life, and cannot meet the requirements of high-brightness and high-luminous-efficiency LED encapsulation, meanwhile, preparation process is too complex to be controlled properly.

### SUMMARY OF THE INVENTION

The purpose of the present invention is to provide a mono-component of high-refractive-index LED encapsulant and the method of preparation, the mono-component of high-refractive-index LED encapsulant has some excellent properties of high refractive index, high transmittance, anti-radiation, high and low temperatures resistance, weatherability, and preparation process is simple and easy to control. The technical solutions of the invention are as follows:

In one aspect, a mono-component of high-refractive-index LED encapsulant is made from the materials with following weight ratio: 50 to 80 portions of phenyl vinyl polysiloxane, 25 to 40 portions of cross-linking agent, 0.1 to 0.5 portions of platinum catalyst, 0.01 to 0.1 portions of inhibitor, 0 to 5 portions of additive.

Preferably, the phenyl vinyl polysiloxane is a phenyl vinyl silicone oil of which the viscosity is from 1000 mPa.s to 12000 mPa.s (when the temperature is 25°C), the mass fraction of vinyl is from 1% to 6%, the refractive index is greater than 1.51; or the phenyl vinyl polysiloxane is a phenyl vinyl MDT silicone resin of which the viscosity is from 1000 mPa.s to 12000 mPa.s (when the temperature is 25°C), the mass fraction of vinyl is from 1% to 6%, the refractive index is greater than 1.51; or the phenyl vinyl polysiloxane is a combination of at least two selected from the group consisting of the phenyl vinyl silicone oil, the phenyl vinyl MDT silicone resin, and phenyl vinyl MQ silicone resin with the mass fraction of vinyl is from 1% to 6% and the refractive index is greater than 1.51. Preferably, the weight ratio of M unit and Q unit of the phenyl vinyl MQ silicone resin is from 1.1 to 1.7.

In one preferred embodiment, the cross-linking agent is a phenyl hydrogen silicone oil of which the viscosity is from 500 mPa.s to 3000 mPa.s (when the temperature is 25°C), the mass fraction of hydrogen is from 0.3% to 0.5%, the refractive index is equal or greater than 1.52; or the cross-linking agent is a phenyl hydrogen MDT silicone resin of which the viscosity is from 500 mPa.s to 3000 mPa.s (when the temperature is 25°C), the mass fraction of hydrogen is from 0.3% to 0.5%, the refractive index is equal or greater than 1.52; or the cross-linking agent is a combination of at least two selected from the group consisting of the phenyl hydrogen silicone oil, the phenyl hydrogen MDT silicone resin and phenyl hydrogen MQ silicone resin with the mass fraction of hydrogen is from 0.3% to 0.5% and the refractive index is equal or greater than 1.52. Preferably, the weight ratio of M unit and Q unit of the phenyl vinyl MQ silicone resin is from 1.1 to 1.7.

In another preferred embodiment, the cross-linking agent is selected at least one from the group consisting of tetramethyl diphenyl hydrogenated trisiloxane, phenyl tris (dimethyl hydrogen) siloxane, and diphenyl di (dimethyl hydrogen) siloxane.

Preferably, the platinum catalyst is selected one from the group consisting of platinum complexing methyl phenyl vinyl siloxane, platinum complexing methyl phenyl multi-ethylene oligomers, platinum complexing diethyl phthalate, platinum catalyst coated with organosilicone microspheres, and platinum catalyst coated with organosilicone resin. More preferably, the platinum catalyst is coated with organosilicone microspheres. The platinum catalyst maintain inert under room temperature, the activities of the platinum catalyst tended to be enhanced when heated to a certain temperature (typically from 60°C to 100°C).

The main function of inhibitor is to suppress and control the speed of hydrosilylation reactions, thus to extend storing and using life period of LED encapsulant. Preferably, the inhibitor is phenyl acetylene or phenyl acetylene alcohol, such as 1,4-biphenyl diacetylene; 1-phenyl-1-propyne; 1-phenyl-1-pentine; 1,1-diphenyl-2propiolic-1-alcohol; 3,4-diphenyl-1,5-hexadiyne-3,4-diol; more preferably, the inhibitor is 1-phenyl-1-pentine. Such inhibitors can play a good inhibitory effect with good thermal stability, less volatile and less decomposition; Furthermore, such inhibitors can join to the main structure of the LED encapsulant, making the cured product homogeneously with high-luminous-efficiency and better appearance without yellowing and cracking.

The additive can be silane coupling agent, nano-silica or spherical aluminum oxide. The silane coupling agents primarily serve to strengthen the cohesive property of LED encapsulant. The nano-silica primarily serves to strengthen the intensity, to release internal stress, to increase brightness and to improve heat-conducting property of LED encapsulant. The spherical aluminum oxide primarily serves to strengthen the intensity, to release internal stress, to increase brightness and to improve heat-conducting property of LED encapsulant.

In another aspect, the present invention also provides a preparation method of the high refractive index mono-component LED encapsulant, comprising the processes as follows:
(1) providing materials with the following weight ratio: 50 to 80 portions of phenyl vinyl polysiloxane, 25 to 40 portions of cross-linking agent, 0.1 to 0.5 portions of platinum catalyst, 0.01 to 0.1 portions of inhibitor, 0 to 5 portions of additive;
(2) adding the phenyl vinyl polysiloxane, cross-linking agent, platinum catalyst, inhibitor and additive as in step (1) to a reaction vessel, stirring under the conditions of vacuum degree from -0.06 Mpa to -0.09 Mpa, temperature from 20°C to 25°C (preferably, the stirring speed is from 50 r/m to 80 r/m and the stirring time is from 1h to 3h), thus mixing the materials evenly in the reaction vessel to obtain the high refractive index mono-component LED encapsulant.

The phenyl vinyl MQ silicone resin is solid, while the phenyl vinyl polysiloxane contains phenyl vinyl MQ silicone resin, dissolving the phenyl vinyl polysiloxane before adding it to the reaction vessel as in step (2).

The phenyl hydrogen MQ silicone resin is solid, while the cross-linking agent contains phenyl hydrogen MQ silicone resin, dissolving the cross-linking agent before adding it to the reaction vessel as in step (2).

In order to further improve the reliability and stability of mono-component of high-refractive-index LED encapsulant, filtering the mixed materials in step (2) to remove some of the impurity particles and the inorganic impurities (such as Na, K , Cl, etc.). Preferably, filter material is polytetrafluoroethylene membrane with the diameter of filter hole from 0.4µm to 1µm.

The mono-component of high-refractive-index LED encapsulant as provided in the present has excellent properties of high refractive index(refractive index is from 1.50 to 1.60), high transmittance, anti-radiation, high and low temperatures resistance and weatherability, the viscosity of the encapsulant is from 1000 mPa.s to 7000 mPa.s (when the temperature is 25°C), with sixty days of storage life under room temperature, while six months storage life under the temperature of 0°C to 4°C, the hardness of it is from 80A to 70D, which is suitable for high-power and high-luminous-efficiency LED encapsulating. The raw material is easy to get, and the preparation process is easy to be applied in industrial production because of its convenient operating and control method with mild condition and without pollution.

### DETAILED DESCRIPTION OF THE INVENTION

### Embodiment 1

In the first embodiment, the method of preparing the mono-component of high-refractive -index LED encapsulant comprising the steps as follows:
(1) providing the following materials by weight: 80 kg of phenyl vinyl polysiloxane (comprising 60kg of phenyl vinyl MDT silicone resin of which the viscosity is 12000 mPa.s (when the temperature is 25°C), the mass fraction of vinyl is 5%, the refractive index is 1.54; and 20kg of phenyl vinyl silicone oil of which the viscosity is 1000 mPa.s (when the temperature is 25°C), the mass fraction of vinyl is 1%, the refractive index is 1.53); 30kg of cross-linking agent (it is phenyl hydrogen silicone oil of which the viscosity is 500 mPa.s (when the temperature is 25°C), the mass fraction of hydrogen is 0.3%, the refractive index is 1.52); 0.15kg of platinum catalyst (it is platinum catalyst coated with organosilicone microspheres having 0.3% mass fraction of Pt); 0.015kg of inhibitor (it is 1- phenyl -1-pentine); 3kg of additive (it is spherical aluminum oxide and particle size of spherical aluminum oxide is 50nm);
(2) adding the phenyl vinyl polysiloxane, cross-linking agent, platinum catalyst, inhibitor and additive of step (1) to a reaction vessel, stirring under the conditions of vacuum degree -0.09 Mpa and temperature 25°C (the stirring speed is 50 r/m and the stirring time is 3h), mixing these materials evenly and then filtering the mixture using polytetrafluoroethylene membrane having filter hole of 0.4µm at diameter, and then the mono-component of high-refractive -index LED encapsulant is obtained. The viscosity of encapsulant is 4000 mPa.s (when the temperature is 25°C) and refractive index of encapsulant is 1.53.

When using the mono-component of high-refractive-index LED encapsulant(when it is used for the encapsulating of solid crystal wire bond SMD5050 lamp beads), exhausting bubbles from the encapsulant under the condition of vacuum, and then injecting the encapsulant in the mold having a size of 2mm×10mm×4mm, then procuring it for 1 hour under 80°C, and then curing it for 3 hours under 150°C to make it a silicon sheet. According to test results, the silicon sheet has a refractive index of 1.535, transmittance of 95% (tested under the conditions that wavelength of incident light is 450nm and the thickness of the silicon sheet is 2mm), hardness of 45D, tensile strength of 2.56 MPa.s, and elongation of 30%. The encapsulated solid crystal wire bond SMD5050 lamp beads doesn't have any abnormal results after red ink test, reflow soldering test and thermal shock test for 500 times.

### Embodiment 2

In the second embodiment, the method of preparing the mono-component of high-refractive -index LED encapsulant comprising the steps as follows:
(1) providing the following materials by weight: 80kg of phenyl vinyl polysiloxane (comprising 50kg of phenyl vinyl silicone oil of which the viscosity is 2000 mPa.s (when the temperature is 25°C), the mass fraction of vinyl is 2.2%, the refractive index is 1.54; and 30kg of powdered phenyl vinyl MQ silicone resin of which the mass fraction of vinyl is 3%, the refractive index is 1.52 and the weight ratio of M unit and Q unit is 1.4); 25 kg of cross-linking agent (it is phenyl hydrogen silicone oil of which the viscosity is 1000 mPa.s (when the temperature is 25°C), the mass fraction of hydrogen is 0.5%, the refractive index is 1.52); 0.1kg of platinum catalyst (it is platinum complexing diethyl phthalate and the mass fraction of Pt is 0.5%); 0.01kg of inhibitor (it is 1,4-biphenyl diacetylene); 3kg of additive (it is nano-silica and particle size of nano-silica is 15nm);
(2) preprocessing the phenyl vinyl polysiloxane: mixing the phenyl with vinyl silicone oil and phenyl vinyl MQ silicone resin in step(1) together, then stirring the mixture under the conditions of vacuum degree -0.09 Mpa and temperature 130°C to dissolve phenyl vinyl MQ silicone, and then cooling the mixture to 20°C;
(3)adding phenyl vinyl polysiloxane in step (2) and cross-linking agent, platinum catalyst, inhibitor, additive in step (1) to a reaction vessel, stirring under the conditions of vacuum degree -0.06 Mpa and temperature 20°C (the stirring speed is 80 r/m and the stirring time is 1h), mixing these materials evenly and then filtering the mixture using polytetrafluoroethylene membrane having filter hole of 1µm diameter, thus obtaining the mono-component of high-refractive-index LED encapsulant. The encapsulant has a viscosity of it is 5000 mPa.s and the refractive index of 1.51.

When using the mono-component of high-refractive-index LED encapsulant(when it is used for the encapsulating of solid crystal wire bond SMD5050 lamp beads), exhausting bubbles from it under the condition of vacuum, and then injecting it in the mold having a size of 2mm×10mm×4mm, then procuring it for 1 hour under 80°C, and then curing it for 3 hours under 150°C to make it a silicon sheet. According to test results, the silicon sheet has a refractive index of 1.522, transmittance of 94% (tested under the conditions that wavelength of incident light is 450nm and the thickness of the silicon sheet is 2mm), hardness of it is 50D, tensile strength of 3.26 MPa.s, and elongation of 30%.The encapsulated solid crystal wire bond SMD5050 lamp beads doesn't have any abnormal results after red ink test, reflow soldering test and thermal shock test for 500 times.

### Embodiment 3

In the third embodiment, the method of preparing the mono-component of high-refractive -index LED encapsulant comprising the steps as follows:
(1) providing the following materials by weight: 50kg of phenyl vinyl polysiloxane (comprising 20kg of phenyl vinyl silicone oil of which the viscosity is 1500 mPa.s (when the temperature is 25°C), the mass fraction of vinyl is 4.5%, the refractive index is 1.54; and other 30kg of phenyl vinyl MQ silicone resin of which the mass fraction of vinyl is 5%, the refractive index is 1.54 and the weight ratio of M unit and Q unit is 1.7); 35kg of cross-linking agent (it is phenyl hydrogen silicone oil of which the viscosity is 2700 mPa.s (when the temperature is 25°C), the mass fraction of hydrogen is 0.4%, the refractive index is 1.54); 0.12kg of platinum catalyst (it is platinum catalyst coated with organosilicone microspheres having 0.6% mass fraction of Pt); 0.011kg of inhibitor (it is 1,1-diphenyl-2propiolic-1-alcohol);
(2) preprocessing the phenyl vinyl polysiloxane: mixing the phenyl vinyl silicone oil and phenyl vinyl MQ silicone resin in step (1) together, then stirring the mixture under the conditions of vacuum degree -0.09 Mpa and temperature 130°C to dissolve powdered phenyl vinyl MQ silicone, and then cooling the mixture to 22°C;
(3) adding the phenyl vinyl polysiloxane in step (2) and cross-linking agent, platinum catalyst, inhibitor in step (1) to a reaction vessel, stirring under the conditions of vacuum degree -0.08 Mpa and temperature 22°C(the stirring speed is 60 r/m and the stirring time is 2h), mixing these materials evenly and then filtering the mixture using polytetrafluoroethylene membrane of which the diameter of filter hole is 0.4µm, thus obtaining the mono-component of high-refractive-index LED encapsulant. Viscosity of the encapsulant is 4500 mPa.s and the refractive index of the encapsulant is 1.54.

When using the mono-component of high-refractive-index LED encapsulant (when it is used for the encapsulating of solid crystal wire bond SMD5050 lamp beads), exhausting bubbles from it under the condition of vacuum, injecting it in the mold of 2mm×10mm×4mm in size, then procuring it for 1 hour under 80°C, and then curing it for 3 hours under 150°C to make it a silicon sheet. According to test results, refractive index of the silicon sheet is 1.546, the silicon sheet has a transmittance of 95% (tested under the conditions that wavelength of incident light is 450nm and the thickness of the silicon sheet is 2mm), hardness of 30D, tensile strength of 2.03 MPa.s, and elongation of 50%. The encapsulated solid crystal wire bond SMD5050 lamp beads doesn't have any abnormal after red ink test, reflow soldering test and thermal shock test for 500 times.

### Embodiment 4

In the fourth embodiment, the method preparing of the mono-component of high-refractive-index LED encapsulant comprising the steps as follows:
(1) providing the following materials by weight: 50kg of phenyl vinyl polysiloxane (it is phenyl vinyl MDT silicone resin of which the viscosity is 5000 mPa.s(when the temperature is 25°C), the mass fraction of vinyl is 4%, the refractive index is 1.54); 40kg of cross-linking agent (it is tetramethyl diphenyl hydrogenated trisiloxane); 0.5kg of platinum catalyst (it is platinum complexing methyl phenyl vinyl siloxane and the mass fraction of Pt is 0.5%); 0.06kg of inhibitor (it is 1- phenyl -1-pentine). 5kg of additive (it is spherical aluminum oxide and particle size of spherical aluminum oxide is 50nm);
(2) adding the phenyl vinyl polysiloxane, cross-linking agent, platinum catalyst, inhibitor and additive to reaction vessel, stirring under the conditions of vacuum degree -0.07 Mpa and temperature 25°C(the stirring speed is 70 r/m and the stirring time is 2h), mixing these materials evenly and then filtering the mixture using polytetrafluoroethylene membrane with filter hole having a diameter of 0.8µm, thus obtaining the mono-component of high-refractive-index LED encapsulant. The encapsulant has a viscosity of 4000 mPa.s (when the temperature is 25°C) and refractive index of 1.53.

When using the mono-component of high-refractive-index LED encapsulant (when it is used for the encapsulating of solid crystal wire bond SMD5050 lamp beads), exhausting bubbles from it under the condition of vacuum, then procuring it for 1 hour under 80°C, injecting it in the mold of 2mm×10mm×4mm in size, and then curing it for 3 hours under 150°C to make it a silicon sheet. According to test results, refractive index of the silicon sheet is 1.535, transmittance of it is 95% (tested under the conditions that wavelength of incident light is 450nm and the thickness of the silicon sheet is 2mm), hardness of it is 45D, tensile strength of it is 2.56 MPa.s, and elongation of it is 30%; the encapsulated solid crystal wire bond SMD5050 lamp beads doesn't have any abnormal after red ink test, reflow soldering test and thermal shock test for 500 times.

### Embodiment 5

In the fifth embodiment, the method of preparing the mono-component of high-refractive -index LED encapsulant comprising the steps as follows:
(1) providing the following materials by weight: 60kg of phenyl vinyl polysiloxane (comprising 30kg of phenyl vinyl MDT silicone resin of which the viscosity is 10000 mPa.s (when the temperature is 25°C), the mass fraction of vinyl is 3%, the refractive index is 1.52, and other 30kg of phenyl vinyl MQ silicone resin of which the mass fraction of vinyl is 2%, the refractive index is 1.53 and the weight ratio of M unit and Q unit is 1.6); 30kg of cross-linking agent (it is phenyl MDT hydrogen silicone resin of which the viscosity is 2000 mPa.s (when the temperature is 25°C), the mass fraction of hydrogen is 0.5%, the refractive index is 1.53); 0.3kg of platinum catalyst (it is platinum catalyst coated with organosilicone microspheres and the mass fraction of Pt is 0.5%); 0.03kg of inhibitor (it is 3,4-diphenyl-1,5-hexadiyne-3,4-diol); 1kg of additive (it is silane coupling agent);
(2) preprocessing the phenyl vinyl polysiloxane: mixing the phenyl vinyl MDT silicone resin and powdered phenyl vinyl MQ silicone resin in step(1) together, then stirring the mixture under the conditions of vacuum degree -0.09 Mpa and temperature 130°C to dissolve the powdered phenyl vinyl MQ silicone, and then cooling the mixture to 25°C;
(3) adding the phenyl vinyl polysiloxane in step(2) and cross-linking agent, platinum catalyst, inhibitor and additive in step (1) to a reaction vessel, stirring under the conditions of vacuum degree -0.08 Mpa and temperature 25°C(the stirring speed is 60 r/m and the stirring time is 2.5h), mixing these materials evenly and then filtering the mixture using polytetrafluoroethylene membrane of which the diameter of filter hole is 0.6µm, thus obtaining the mono-component of high-refractive -index LED encapsulant. The encapsulant has a viscosity of 4000 mPa.s and a refractive index of 1.53.

When using the mono-component of high-refractive-index LED encapsulant(when it is used for the encapsulating of solid crystal wire bond SMD5050 lamp beads), exhausting bubbles from it under the condition of vacuum, then procuring it for 1 hour under 80°C, injecting it in a mold of 2mm×10mm×4mm in size, and then curing it for 3 hours under 150°C to make it a silicon sheet. According to test results, refractive index of the silicon sheet is 1.535, transmittance of it is 95% (tested under the conditions that wavelength of incident light is 450nm and the thickness of the silicon sheet is 2mm), hardness of it is 45D, tensile strength of it is 2.56 MPa.s, and elongation of it is 30%; the encapsulated solid crystal wire bond SMD5050 lamp beads doesn't have any abnormal after red ink test, reflow soldering test and thermal shock test for 500 times.

### Embodiment 6

In the sixth embodiment, the method of preparing the mono-component of high-refractive -index LED encapsulant comprising the steps as follows:
(1) providing the following materials by weight: 80kg of phenyl vinyl polysiloxane (comprising 50kg of phenyl vinyl MDT silicone resin of which the viscosity is 10000 mPa.s (when the temperature is 25°C), the mass fraction of vinyl is 3%, the refractive index is 1.54, and other 30kg of phenyl vinyl silicone oil of which the viscosity is 3000mPa.s (when the temperature is 25°C), the mass fraction of vinyl is 4%, the refractive index is 1.53); 40kg of cross-linking agent (comprising 20kg of phenyl tris(dimethyl hydrogen) siloxane, the other 20kg of diphenyl di(dimethyl hydrogen) siloxane); 0.4kg of platinum catalyst (it is platinum complexing methyl phenyl multi-ethylene oligomers and the mass fraction of Pt is 0.3%); 0.05kg of inhibitor (it is 1-phenyl -1-propyne); 2kg of additive (it is spherical aluminum oxide and particle size of spherical aluminum oxide is 50nm);
(2) adding the phenyl vinyl polysiloxane, cross-linking agent, platinum catalyst, inhibitor and additive to reaction vessel, stirring under the conditions of vacuum degree -0.09 Mpa and temperature 25°C(the stirring speed is 60 r/m and the stirring time is 3h), mixing these materials evenly and then filtering the mixture using polytetrafluoroethylene membrane of which the diameter of filter hole is 0.4µm, thus obtaining the mono-component of high-refractive-index LED encapsulant, viscosity of it is 4000 mPa.s(when the temperature is 25°C) and refractive index of it is 1.53.

When using the mono-component of high-refractive-index LED encapsulant(when it is used for the encapsulating of solid crystal wire bond SMD5050 lamp beads), exhausting bubbles from it under the condition of vacuum, then injecting it in a mold of 2mm×10mm×4mm in size, procuring it for 1 hour under 80°C, and then curing it for 3 hours under 150°C to make it a silicon sheet. According to test results, refractive index of the silicon sheet is 1.535, transmittance of it is 95% (tested under the conditions that wavelength of incident light is 450nm and the thickness of the silicon sheet is 2mm), hardness of it is 45D, tensile strength of it is 2.56 MPa.s, and elongation of it is 30%; the encapsulated solid crystal wire bond SMD5050 lamp beads doesn't have any abnormal after red ink test, reflow soldering test and thermal shock test for 500 times.

### Embodiment 7

In the seventh embodiment, the method of preparing the mono-component of high-refractive -index LED encapsulant comprising the steps as follows:
(1) providing the following materials by weight: 50kg of phenyl vinyl polysiloxane (it is phenyl vinyl silicone oil of which the viscosity is 9000 mPa.s (when the temperature is 25°C), the mass fraction of vinyl is 6%, the refractive index is 1.54); 25 kg of cross-linking agent (comprising 15kg of phenyl hydrogen silicone oil of which the viscosity is 1000 mPa.s (when the temperature is 25°C), the mass fraction of hydrogen is 0.5%, the refractive index is 1.52, and other 10kg of powdered phenyl hydrogen MQ silicone resin of which the mass fraction of hydrogen is 0.4%, the refractive index is 1.53 and the weight ratio of M unit and Q unit is 1.4); 0.2kg of platinum catalyst (it is platinum catalyst coated with organosilicone resin and the mass fraction of Pt is 0.5%); 0.03kg of inhibitor (it is 1,4-biphenyl diacetylene);
(2) preprocessing the cross-linking agent: mixing the phenyl hydrogen silicone oil and powdered phenyl hydrogen MQ silicone resin in step (1) together, then stirring the mixture under the conditions of the vacuum degree -0.08 Mpa and the temperature 120°C to dissolve the powdered phenyl hydrogen MQ silicone, and then cooling the mixture to 20°C;
(3) adding cross-linking agent in step(2) and phenyl vinyl polysiloxane, platinum catalyst, inhibitor in step (1) to reaction vessel, stirring under the conditions of vacuum degree -0.06 Mpa and temperature 20°C(the stirring speed is 80 r/m and the stirring time is 1.5h), mixing these materials evenly and then filtering the mixture using polytetrafluoroethylene membrane of which the diameter of filter hole is 0.8µm, thus obtaining the mono-component of high-refractive-index LED encapsulant, viscosity of it is 5000 mPa.s and refractive index of it is 1.51.

When using the mono-component of high-refractive-index LED encapsulant (when it is used for the encapsulating of solid crystal wire bond SMD5050 lamp beads), injecting it in the mold of which the size is 2mm×10mm×4mm after exhausting bubbles from it under the condition of vacuum, then procuring it for 1 hour under 80°C, and then curing it for 3 hours under 150°C to make it a silicon sheet. According to test results, refractive index of the silicon sheet is 1.522, transmittance of it is 94% (tested under the conditions that wavelength of incident light is 450nm and the thickness of the silicon sheet is 2mm), hardness of it is 50D, tensile strength of it is 3.26 MPa.s, and elongation of it is 30%; the encapsulated solid crystal wire bond SMD5050 lamp beads doesn't have any abnormal after red ink test, reflow soldering test and thermal shock test for 500 times.

## Claims

1. A mono-component of high-refractive-index LED encapsulant, **characterized in that** it is made from the materials with following weight ratio: 50 to 80 portions of phenyl vinyl polysiloxane, 25 to 40 portions of cross-linking agent, 0.1 to 0.5 portions of platinum catalyst, 0.01 to 0.1 portions of inhibitor, 0 to 5 portions of additive.

2. The mono-component of high-refractive-index LED encapsulant according to claim 1, wherein the phenyl vinyl polysiloxane is:
a phenyl vinyl silicone oil of which the viscosity is from 1000 mPa.s to 12000 mPa.s, the mass fraction of vinyl is from 1% to 6%, and the refractive index is greater than 1.51; or
a phenyl vinyl MDT silicone resin of which the viscosity is from 1000 mPa.s to 12000 mPa.s, the mass fraction of vinyl is from 1% to 6%, and the refractive index is greater than 1.51; or
a combination of at least two selected from the group consisting of the phenyl vinyl silicone oil, the phenyl vinyl MDT silicone resin, and phenyl vinyl MQ silicone resin with the mass fraction of vinyl is from 1% to 6% and the refractive index is greater than 1.51.

3. The mono-component of high-refractive-index LED encapsulant according to claim 1, wherein the cross-linking agent is:
a phenyl hydrogen silicone oil of which the viscosity is from 500 mPa.s to 3000 mPa.s, the mass fraction of hydrogen is from 0.3% to 0.5%, and the refractive index is equal or greater than 1.52; or
a phenyl hydrogen MDT silicone resin of which the viscosity is from 500 mPa.s to 3000 mPa.s, the mass fraction of hydrogen is from 0.3% to 0.5%, and the refractive index is equal or greater than 1.52; or
a combination of at least two selected from the group consisting of the phenyl hydrogen silicone oil, the phenyl hydrogen MDT silicone resin, and phenyl hydrogen MQ silicone resin with the mass fraction of hydrogen is from 0.3% to 0.5% and the refractive index is equal or greater than 1.52.

4. The mono-component of high-refractive-index LED encapsulant according to claim 1, wherein the cross-linking agent is selected at least one or more from the group consisting of tetramethyl diphenyl hydrogenated trisiloxane, phenyl tris (dimethyl hydrogen) siloxane, and diphenyl di (dimethyl hydrogen) siloxane.

5. The mono-component of high-refractive-index LED encapsulant according to claim 1, wherein the platinum catalyst is one selected from the group consisting of platinum complexing methyl phenyl vinyl siloxane, platinum complexing methyl phenyl multi-ethylene oligomers, platinum complexing diethyl phthalate, platinum catalyst coated with organosilicone microspheres, and platinum catalyst coated with organosilicone resin.

6. The mono-component of high-refractive-index LED encapsulant according to claim 1, wherein the inhibitor is phenyl acetylene or phenyl acetylene alcohol.

7. The mono-component of high-refractive-index LED encapsulant according to claim 1, wherein the additive is silane coupling agent, nano-silica, or spherical aluminum oxide.

8. A method of preparing a mono-component of high-refractive-index LED encapsulant according to claim 1, comprising the processes of:
(1) providing materials with the following weight ratio: 50 to 80 portions of phenyl vinyl polysiloxane, 25 to 40 portions of cross-linking agent, 0.1 to 0.5 portions of platinum catalyst, 0.01 to 0.1 portions of inhibitor, 0 to 5 portions of additive;
(2) adding the phenyl vinyl polysiloxane, cross-linking agent, platinum catalyst, inhibitor and additive as in step (1) to a reaction vessel, stirring under the conditions of vacuum degree from -0.06 Mpa to -0.09 Mpa, temperature from 20°C to 25°C, thus mixing the materials evenly in the reaction vessel to obtain the high refractive index mono-component LED encapsulant.

9. The method according to claim 8, wherein the phenyl vinyl polysiloxane is
a phenyl vinyl silicone oil of which the viscosity is from 1000 mPa.s to 12000 mPa.s, the mass fraction of vinyl is from 1% to 6%, and the refractive index is greater than 1.51; or
a phenyl vinyl MDT silicone resin of which the viscosity is from 1000 mPa.s to 12000 mPa.s, the mass fraction of vinyl is from 1% to 6%, and the refractive index is greater than 1.51; or
a combination of at least two selected from a group consisting of the phenyl vinyl silicone oil, the phenyl vinyl MDT silicone resin, and phenyl vinyl MQ silicone resin with the mass fraction of vinyl is from 1% to 6% and the refractive index is greater than 1.51;
while the phenyl vinyl polysiloxane contains phenyl vinyl MQ silicone resin, dissolving the phenyl vinyl polysiloxane before adding it into the reaction vessel as in step (2).

10. The method according to claim 8, wherein the cross-linking agent is
a phenyl hydrogen silicone oil of which the viscosity is from 500 mPa.s to 3000 mPa.s, the mass fraction of hydrogen is from 0.3% to 0.5%, and the refractive index is equal or greater than 1.52; or
a phenyl hydrogen MDT silicone resin of which the viscosity is from 500 mPa.s to 3000 mPa.s, the mass fraction of hydrogen is from 0.3% to 0.5%, and the refractive index is equal or greater than 1.52; or
a combination of at least two selected from a group consisting of the phenyl hydrogen silicone oil, the phenyl hydrogen MDT silicone resin, and phenyl hydrogen MQ silicone resin with the mass fraction of hydrogen is from 0.3% to 0.5% and the refractive index is equal or greater than 1.52;
while the cross-linking agent contains phenyl hydrogen MQ silicone resin, dissolving the cross-linking agent before adding it into the reaction vessel as in step (2).
